# FASCICULE DE BREVET EUROPEEN

(11) **EP 2 418 821 B1**
(45) Date de publication et mention de la délivrance du brevet: **04.06.2014**
(21) Numéro de dépôt: 11177152.3
(22) Date de dépôt: 10.08.2011
(51) Int. Cl.: H04L 29/06

(54) **Procédé de commande d'une entité d'un premier réseau à partir d'un deuxième réseau**
Verfahren zur Steuerung einer Einheit eines ersten Netzes von einem zweiten Netz aus
Method for controlling an entity of a first network from a second network

(30) Priorité: 13.08.2010 FR 1056593
(43) Date de publication de la demande: 15.02.2012
(73) Titulaire: Orange, 75015 Paris (FR)
(72) Inventeur: Agro, Roberto, 92340 Bourg La Reine (FR)

(56) Documents cités:
- WEGNER T: "A Modular UPnP Proxy for Secure Remote Access", 10 février 2010 (2010-02-10), DIGITAL SOCIETY, 2010. ICDS '10. FOURTH INTERNATIONAL CONFERENCE ON, IEEE, PISCATAWAY, NJ, USA, PAGE(S) 72 - 77, XP031649397, ISBN: 978-1-4244-5805-9 * abrégé * * page 74; figure 1 * * page 75; figure 2 * * page 74, colonne de gauche, ligne 1 - colonne de droite, ligne 10 * * page 75, colonne de droite, ligne 6 - ligne 47 *
- SELEN K: "Upnp security in internet gateway devices", PUBLICATIONS IN TELECOMMUNICATIONS SOFTWARE AND MULTIMEDIA, ESPOO, FINLAND, , 1 janvier 2006 (2006-01-01), XP008136404, Extrait de l'Internet: URL:http://www.tml.tkk.fi/Publications/C/2 1/Selen_ready.pdf [extrait le 2011-05-11]

## Description

L'invention concerne le domaine des télécommunications et plus particulièrement un procédé de commande d'une entité d'un réseau distant à partir d'un réseau local.

Différentes technologies permettent d'établir une connexion d'un réseau à un autre, par exemple dans un but de commande d'une entité d'un réseau distant à partir d'un réseau local. Par exemple, les tunnels sécurisés VPN (Virtual Private Network). Une autre solution couramment utilisée consiste à faire appel à une architecture IMS (IP Multimedia Subsystem).

Dans le domaine des réseaux domestiques, le protocole UPNP s'impose comme un standard pour le partage, la diffusion et le contrôle des contenus numériques. Aujourd'hui, différents équipements conformes au standard UPNP (Universal Plug and Play) se répandent dans les foyers, et en particulier dans le domaine du multimédia avec les Media Servers (nommés par exemple "Twonkymedia", Windows Media Player 11, ...), les Media Renderers (STB, DMA audio, IP-Radio, ...), et les Media Players (consoles de jeux, des cadres photo numériques, ...). Cependant les équipements d'un réseau UPnP ne sont pas conçus pour communiquer avec un équipement d'un autre réseau UPnP. En effet, le mécanisme de découverte d'entités UPnP utilise un envoi de commande en mode "multicast" (multidiffusion) qui ne permet que de découvrir des entités présentes dans un réseau local.

Les solutions à base de tunnel VPN ou architecture IMS existantes sont quant à elles relativement lourdes et complexes à mettre en oeuvre. En outre, avec les solutions à base de tunnel VPN, des problèmes de conflit d'adresses se posent. Les architectures IMS ne sont pas forcément mise à disposition librement des utilisateurs du grand public.

Il apparaît ainsi un besoin pour une solution simple de mise en relation de deux réseaux, permettant la commande d'une entité d'un réseau distant à partir d'un réseau local et qui soit applicable pour une mise en communication d'un équipement UPnP d'un réseau avec un équipement d'un autre réseau UPnP.

Le document XP031649397 décrit une méthode d'accès à distance à des entités UPnP d'un réseau distant, utilisant un proxy distant sans préciser le mode de connexion à ce proxy.

Un des buts de l'invention est de remédier à des problèmes, inconvénients ou insuffisances de l'état de la technique et/ou d'y apporter des améliorations.

L'invention concerne, selon un premier aspect, un procédé de commande à distance selon la revendication 1.

Le procédé selon l'invention permet à un utilisateur de commander facilement une entité - par exemple une entité UPnP - d'un réseau distant à partir d'un terminal / équipement d'un réseau local, distinct du réseau distant.

Les modules relais servent à la mise en relation des deux réseaux en vue de la transmission de commandes destinées à l'entité du premier réseau.

Les données d'adressage nécessaires à cette communication sont obtenues en échange d'un code d'accès affecté à un utilisateur pour un accès distant au premier réseau. La connaissance de ce code d'accès permet donc à elle seule la mise en communication entre les deux réseaux. Ce qui simplifie considérablement la mise en relation avec l'entité distante: l'utilisateur n'a notamment pas besoin de transporter avec lui des composants logiciels qui soient capables de se connecter au module relais du premier réseau.

Selon un mode de réalisation du procédé selon l'invention, les données d'adressage sont obtenues auprès d'un serveur ayant fourni ledit code d'accès audit utilisateur. Le code d'accès fourni à un utilisateur est ainsi transmis de manière sécurisée de telle manière que seul un utilisateur ayant reçu un tel code d'accès soit en mesure d'établir une communication avec le premier réseau au moyen des modules relais.

Selon un mode de réalisation, ladite entité est un serveur de contenu, le procédé selon l'invention comprenant une étape de fourniture d'une adresse d'au moins un contenu référencé par ledit serveur de contenus, ladite adresse désignant le deuxième module relais comme entité auprès de laquelle ledit contenu est susceptible d'être obtenu. Lorsque l'entité à commander est un serveur de contenu, un utilisateur peut aisément accéder à l'ensemble de ses contenus à partir du réseau domestique local d'un ami ou membre du sa famille sans avoir à se soucier de problème d'adressage: en effet, c'est le deuxième module relais qui est désigné comme entité affectée à la fourniture des contenus. Les données d'un contenu pourront donc être obtenues en interrogeant le deuxième module relais, qui coopèrera avec le premier module relais pour relayer des demandes de données de contenu vers le serveur de contenus disposant effectivement de ces données.

Selon un mode de réalisation, le procédé selon l'invention comprend une étape de mise en oeuvre d'un mécanisme de découverte par le deuxième module relais afin que ce deuxième module relais soit reconnu en tant serveur de contenus du deuxième réseau local. De cette manière, tout se passe pour l'utilisateur comme si le serveur de contenus distant était présent dans le réseau local. Il devient alors facile de communiquer avec ce serveur de contenus.

Selon un mode de réalisation du procédé selon l'invention, le code d'accès est temporaire et/ou à usage unique. Cette disposition a pour but d'éviter des usages frauduleux d'un tel code d'accès.

Selon une implémentation préférée, les différentes étapes du procédé selon l'invention sont mises en oeuvre par un ou plusieurs modules logiciels ou programmes d'ordinateur, ce logiciel comprenant des instructions logicielles destinées à être exécutées par un processeur de données d'un équipement selon l'invention et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon une autre implémentation, l'invention est mise en oeuvre au moyen de composants logiciels et/ou matériels. Dans cette optique, le terme "module" peut correspondre dans ce document aussi bien à un composant logiciel qu'à un composant matériel ou encore à un composant matériel programmable, avec ou sans processeur intégré.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. De la même manière, un composant matériel correspond à tout élément d'un ensemble matériel (ou hardware) apte à mettre en oeuvre une fonction ou un ensemble de fonctions, selon ce qui est décrit ci-dessous pour le module concerné.

L'invention concerne également un équipement de commande à distance selon la revendication 7.

Les avantages énoncés pour le procédé selon l'invention sont transposables directement à cet équipement.

Selon un mode de réalisation, l'équipement comprend des moyens d'interrogation d'un serveur ayant fourni ledit code d'accès audit utilisateur.

L'invention concerne également un serveur de contrôle d'accès selon la revendication 10.

Les avantages énoncés pour le procédé selon l'invention sont transposables directement à ce serveur.

Selon un mode de réalisation, le serveur selon l'invention comprend
- des moyens pour transmettre ledit code d'accès à un terminal,
- des moyens pour recevoir ledit code d'accès en provenance d'un équipement requérant lesdites données d'adressage,
- des moyens pour vérifier si l'équipement qui fournit ledit code d'accès est identifié par la même adresse que le terminal auquel ce même code d'accès a été fourni précédemment par ledit serveur.

Selon un mode de réalisation, le serveur selon l'invention comprend
- des moyens pour transmettre ledit code d'accès à un terminal,
- des moyens pour, à réception d'un code d'accès en provenance d'un équipement requérant lesdites données d'adressage, envoyer audit terminal un message pour demander à un utilisateur de ce terminal s'il autorise l'envoi audit équipement desdites données d'adressage.

L'invention concerne également un terminal selon la revendication 13. Ce terminal est utilisé en combinaison avec le serveur selon l'invention pour la phase de génération du code d'accès..

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système de communication intégrant un dispositif selon l'invention;
- la figure 2 représente un organigramme d'une première phase d'un mode de réalisation du procédé selon l'invention ;
- la figure 3 représente un organigramme d'une deuxième phase d'un mode de réalisation du procédé selon l'invention ;
- la figure 4 représente un organigramme d'une troisième phase d'un mode de réalisation du procédé selon l'invention.

L'invention concerne un procédé de commande à distance d'une entité d'un premier réseau à partir d'un deuxième réseau.

L'invention est décrite plus en détail dans le cas de son application à la commande à distance, à partir d'un réseau d'accueil local, d'une entité sous forme de serveur de contenus situé dans un réseau source distant et d'une méthode d'accès aux contenus stockés par un tel serveur. L'invention permet ainsi la mise en oeuvre d'un service d'accès distant aux contenus d'un réseau domestique d'un utilisateur U1.

Le serveur de contenus est par exemple un serveur de contenus conforme au standard UPnP (Universal Plug and Play). Un tel serveur de contenu est nommé "Digital Media Server" (DMS) dans le contexte de l'architecture UPnP. Toutefois le mécanisme proposé par l'invention est transposable à d'autres protocoles servant à la commande d'entités d'un réseau local.

L'invention est également applicable à la commande à distance d'autres types d'entités conformes au standard UPnP, notamment à la commande de dispositifs de restitution de contenu, nommés "Digital Media Renderer" (DMR).

Les mécanismes d'envoi de commandes par l'intermédiaire d'entités mandataires sont aisément transposables au cas d'utilisation d'un protocole de commande autre qu'UPnP.

Le standard UPnP fournit des mécanismes et une architecture permettant une mise en relation, de type réseau de pairs, entre les entités UPnP. Chaque entité UPnP peut être intégrée physiquement dans un des terminaux du réseau local ou encore dans un équipement de type passerelle d'interconnexion (Gateway), set-top-box (STB), routeur ou encore serveur de stockage de type NAS (Network Attached Storage), etc. Les mécanismes de communication prévus dans le standard UPnP sont conçus pour permettre une interopérabilité entre les entités UPnP. Ces mécanismes utilisent notamment les protocoles TCP/UDP/IP (Transmission Control Protocol/User Datagram Protocol/Internet Protocol) pour le transport des requêtes UPnP.

Dans le cadre de ce document, une entité est dite entité UPnP si elle est conforme au standard UPnP ou à un autre standard équivalent ou dérivé, notamment si elle utilise un protocole de commande conforme à un tel standard.

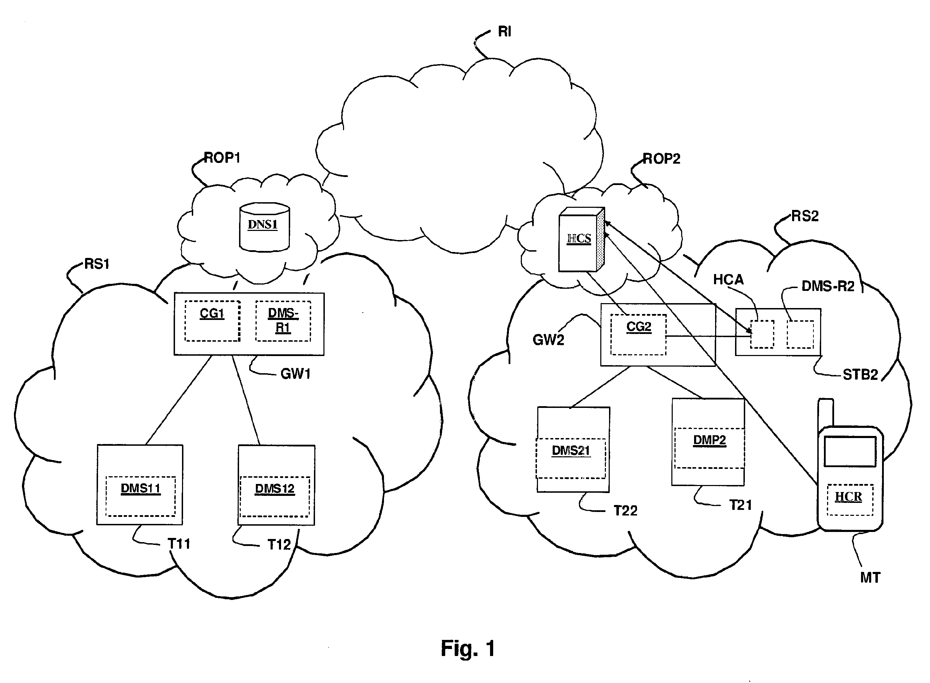

Le système représenté à la figure 1 est organisé autour, d'une part, d'un premier réseau local réseau RS1 (Local Area Network), dit réseau source, appartenant à l'utilisateur U1, et, d'autre part, d'un deuxième réseau local RS2, dit réseau d'accueil, ces deux réseaux locaux étant interconnectés entre eux via un réseau étendu RI (Wide Area Network), par exemple le réseau Internet. Les réseaux locaux RS1 et RS2 sont par exemple des réseaux domestiques.

Dans le réseau source RS1 se trouvent les entités suivantes:
- un premier équipement T11, hébergeant un serveur de contenus DMS11, conforme au standard UPnP;
- un deuxième équipement T12, hébergeant un autre serveur de contenus DMS12, conforme au standard UPnP;
- une passerelle domestique GW1, servant de passerelle d'accès au réseau source RS1, hébergeant un module relais DMS-R1, nommé également module relais source et un module d'interconnexion CG1 pour la connexion avec le réseau étendu RI.

Dans le réseau d'accueil RS2 se trouvent les entités suivantes:
- un premier équipement T21, sous forme par exemple d'ordinateur personnel, hébergeant un dispositif de restitution de contenus DMP2 (Digital Media Player ou Digital Media Renderer), conforme au standard UPnP;
- un deuxième équipement T22, hébergeant un serveur de contenus DMS21, conforme au standard UPnP;
- une passerelle domestique GW2, servant de passerelle d'accès au réseau d'accueil RS2, hébergeant un module d'interconnexion CG2 pour la connexion avec le réseau étendu RI;
- un décodeur ou set-top-box STB2, associé à la passerelle d'accès GW2, comprenant d'une part, un agent de connexion HCA, et, d'autre part, un module relais DMS-R2, nommé également module relais local.

Le système représenté à la figure 1 comprend en outre:
- un réseau opérateur ROP1 formant réseau d'accès au réseau Internet pour le réseau d'accueil RS1 via la passerelle domestique GW1;
- un réseau opérateur ROP2 formant réseau d'accès au réseau Internet pour le réseau d'accueil RS2 via la passerelle domestique GW2,
- un serveur DNS1 de noms de domaine (Domain Name Serveur, DNS) présent dans le réseau opérateur ROP1;
- un terminal mobile MT appartenant à l'utilisateur U1, contenant un module applicatif HCR;
- un serveur de contrôle d'accès HCS, accessible à travers le réseau étendu RI (réseau Internet).

### Serveurs de contenus DMS11, DMS12, DMS21

Le serveur de contenus DMS11 (ou DMS12, DMS21) est un serveur de contenus conforme au standard UPnP, ou "Digital Media Server" (DMS). En conséquence, il présente une interface de commande conforme au standard UPnP et est pilotable uniquement au moyen de requêtes UPnP. L'envoi d'une requête UPnP est réalisé usuellement au moyen d'un appel de fonction via une interface logicielle de programmation (API, Application Programming Interface) de l'entité destinataire.

### Passerelle GW1

La passerelle GW1 est une passerelle pour l'interconnexion du réseau source RS1 avec le réseau Internet RI. Elle permet aux terminaux du réseau source RS1 d'accéder au réseau Internet RI. Inversement, la passerelle permet - sous réserve que des droits pour un tel accès soient accordés - à des équipements d'un réseau autre que le réseau source RS1 de communiquer avec un équipement du réseau source RS1.

Le module d'interconnexion CG1 met en oeuvre les fonctions d'interconnexion entre le réseau source RS1 et le réseau Internet RI. Il comprend dans ce but une première interface de communication pour la communication avec les entités du réseau source RS1 et une deuxième interface de communication pour la communication via le réseau Internet RI, notamment avec les entités externes au réseau source RS1. Cette deuxième interface est utilisée pour communiquer avec un fournisseur d'accès à Internet (Internet Service Provider, ISP) de l'opérateur du réseau ROP, ainsi qu'avec le serveur de noms de domaine DNS1.

Le serveur DNS1 maintient une table de correspondance entre des adresses publiques et noms affectés aux équipements qu'il gère. En particulier, le nom affecté à la passerelle domestique GW1 étant général statique, c'est-à-dire ne changent pas, mais l'adresse publique de la passerelle domestique GW1 changeant périodiquement, il est nécessaire pour communiquer avec cette passerelle domestique GW1 de connaître son adresse publique courante, et pour cela d'interroger le serveur DNS1 à partir du nom de la GW1. Ce nom correspond au nom du domaine réseau géré par cette passerelle, et est par exemple sous la forme:
myhome.homedns.org

Ce nom peut être affecté automatiquement par l'opérateur de réseau fournissant la passerelle domestique GW1 ou configuré manuellement par un utilisateur de cette passerelle.

La configuration du nom de domaine associé à la passerelle domestique GW1 est effectuée au moyen du module d'interconnexion CG1 qui communique dans ce but avec le serveur de nom de domaine DNS1.

Le module d'interconnexion CG1 comprend en outre un module d'adressage, sous forme par exemple de dispositif UPnP IGD (Internet Gateway Device) ou de CGI (Common Gateway Interface), en charge du mappage des adresses et ports publics vis-à-vis des adresses et ports privés des équipements du réseau source RS1. Un tel mappage permet à un dispositif extérieur au réseau source RS1 de communiquer avec un équipement de ce réseau source RS1 au moyen d'une adresse et d'un numéro port publics. Ce module d'adressage est utilisé notamment pour permettre une mise en communication du module relais local DMS-R2 avec le module relais source DMS-R1.

### Module relais source DMS-R1

Le module relais source DMS-R1 est un module logiciel, constituant une entité mandataire (entité proxy, selon la terminologie anglo-saxonne) d'un ou plusieurs serveurs de contenus DMS11 et/ou DMS12: le module relais source DMS-R1 sert d'intermédiaire de communication entre un serveur de contenus DMS11 (ou DMS12) et une entité non-conforme à UPnP et/ou ne faisant pas partie du réseau source. Le module relais source DMS-R1 sert ainsi de "représentant" du serveur de contenus DMS11 vis-à-vis d'une telle entité. Grâce à la présence du module relais source DMS-R1, le serveur de contenus DMS11 est pilotable à distance par une entité non-conforme à UPnP et/ou ne faisant pas partie du réseau source.

Plus précisément, le module relais source DMS-R1 met en oeuvre les fonctions d'un point de contrôle UPnP (DMC, Digital Media Controller), notamment les fonctions de détection d'un serveur de contenu UPnP et de consultation du répertoire de contenus (CDS, Content Directory Service) d'un serveur de contenu UPnP.

Le module relais source DMS-R1 comprend une première interface, conforme au protocole UPnP et correspondant à une interface de dispositif de commande UPnP (DMC, Digital Media Controller, nommé également "Point de contrôle" UPnP), pour, d'une part, envoyer des commandes UPnP à une entité UPnP du réseau source RS1, notamment à un des serveurs de contenus DMS11 ou DMS12 et, d'autre part, recevoir et traiter les réponses à ces requêtes.

Comme tout "Point de contrôle" UPnP, le module relais source DMS-R1 détecte les dispositifs UPnP du réseau source lorsque ceux-ci signalent leur présence par émission de message / requête SSDP (Simple Service Discovery Protocol) et déclarent leur capacités, conformément au protocole de découverte prévu dans UPnP.

Le module relais source DMS-R1 comprend une deuxième interface, utilisant un protocole distinct du protocole UPnP et approprié pour envoyer ou recevoir des requêtes non UPnP échangées avec une entité non UPnP et/ou une entité ne faisant pas partie du réseau source RS1. Le protocole utilisé ici est par exemple le protocole HTTP.

Via cette deuxième interface, le module relais source DMS-R1 est apte à dialoguer avec le module relais local DMS-R2, décrit plus en détail ci-dessous, s'exécutant au sein d'un équipement du réseau d'accueil RS2. Ce dialogue s'effectue selon une méthode appropriée, par exemple au moyen d'appels de procédure distante ou au moyen d'une requête de type "web service", conforme à un protocole choisi par exemple parmi XML-RPC, SOAP et REST. Les requêtes échangées entre le module relais source DMS-R1 et le module relais local DMS-R2 sont dans ce cas transportées en utilisant le protocole HTTP.

Le module relais source DMS-R1 est configuré pour recevoir via sa deuxième interface des requêtes non conformes au protocole UPnP, destinées au serveur de contenus DMS11, pour convertir ces requêtes non-conformes à UPnP en requêtes conformes au protocole UPnP et transmettre via sa première interface les requêtes ainsi converties au serveur de contenus DMS11.

Cette conversion de format de requête s'effectue par exemple par dés-encapsulation d'une requête UPnP, ayant été encapsulée dans une requête conforme à un deuxième protocole. Ce deuxième protocole est par exemple le protocole HTTP. Cette opération de conversion de format ne modifie pas les données de la requête UPnP convertie, mais uniquement le format utilisé pour la transmettre. Notons ici qu'une transmission de requête conformément au protocole UPnP s'effectue généralement par appel de fonction d'une interface logicielle du module UPnP destinataire. Plus précisément, dans le standard UPnP, on parle d'invocation d'actions d'un service UPnP mis en oeuvre par le module UPnP destinataire (serveur de contenus UPnP, dispositif de restitution DMR ou DMP).

Un exemple de requête reçue via la deuxième interface est une requête d'obtention de métadonnées de contenus accessibles à partir d'un serveur de contenus UPnP du réseau source RS1. Le module relais source DMS-R1 est conçu pour convertir cette requête en une ou plusieurs requêtes, nommées "Browse" dans le standard UPnP, qui seront émises respectivement à destination des différents serveurs de contenus UPnP du réseau source RS1.

La conversion de format opérée sur une requête incidente par le module relais source DMS-R1, s'accompagne le cas échéant d'opérations telles que:
- ajout de nouveaux paramètres dans la ou les requêtes à émettre et/ou
- décomposition d'une requête incidente en plusieurs requêtes à émettre ou, inversement, combinaison de plusieurs requêtes incidentes en une seule requête à émettre.

Inversement, lorsque le module relais source DMS-R1 reçoit via sa première interface du serveur de contenus DMS11 des réponses UPnP à appels de fonction (toute réponse à une requête UPnP), il les convertit en messages conformes à un autre protocole, appropriés pour la communication avec une entité non-conforme à UPnP et/ou ne faisant pas partie du réseau source, et transmet via sa deuxième interface les messages ainsi convertis à l'entité destinatrice.

Cette conversion de format s'effectue par exemple par encapsulation d'une réponse UPnP dans un message conforme au protocole HTTP. Cette conversion ne modifie pas les données de la réponse UPnP convertie, mais uniquement le format utilisé pour la transmettre.

La conversion de format opérée à cet endroit par le module relais source DMS-R1 s'accompagne le cas échéant d'opérations telles que:
- ajout de nouveaux paramètres dans le ou les messages convertis et/ou
- décomposition d'une réponse incidente en plusieurs messages à émettre ou inversement combinaison de plusieurs réponses incidentes en un seul message à émettre.

Via sa deuxième interface, le module relais source DMS-R1 est apte également à recevoir et retransmettre des requêtes HTTP ne transportant pas de requête de type "web service". Il s'agit notamment de requêtes de transmission de contenus ou de requête d'obtention de contenu ne nécessitant pas de conversion vers une requête ou réponse UPnP.

Le module relais source DMS-R1 sert ainsi mandataire du serveur de contenus DMS11 (ou DMS12) pour l'envoi (respectivement la réception) de requêtes / messages que ce serveur n'est pas apte à envoyer (respectivement recevoir) lui-même. Le module relais source DMS-R1 joue le rôle de proxy inverse ("reverse proxy" en anglais).

Le module relais source DMS-R1 est intégré dans la passerelle domestique GW1 ou dans un autre équipement du réseau source RS1. Il est bien entendu envisageable cependant que les différentes fonctions de ce module soit implémentées de manière répartie, c'est-à-dire dans des équipements physiques distincts, sous réserve qu'un lien de communication soit prévu entre les entités mettant en oeuvre respectivement chacune de ces fonctions.

Lorsque le module relais source DMS-R1 n'est pas intégré dans la passerelle domestique GW1, le module relais source DMS-R1 est conçu pour envoyer des données d'adressage au module d'adressage du module d'interconnexion CG1 afin que ce module d'adressage puisse router au module relais source DMS-R1 les requêtes qui lui sont destinées. Dans ce but, le module relais source DMS-R1 transmet au module d'adressage du module d'interconnexion CG1 un numéro de port et une adresse IP (Internet Protocol) au moyen desquels le module relais source DMS-R1 est susceptible d'être joint. Ce numéro de port et adresse IP sont stockés en correspondance avec le nom de domaine associé à la passerelle domestique GW1 et un numéro de port public affecté au module relais source DMS-R1.

Lorsque le module relais source DMS-R1 est intégré dans la passerelle domestique GW1 aucun dispositif d'adressage n'est nécessaire dans la passerelle domestique GW1 pour joindre le module relais source DMS-R1 à partir d'un équipement externe au réseau source RS1.

Outre les conversions de format de requête du protocole UPnP vers un autre protocole de commande à distance utilisé entre les modules relais DMS-R1 et DMS-R2 ou vice-versa, le module relais source DMS-R1 met en oeuvre une fonction de traduction des adresses de contenus stockés par les serveurs de contenus DMS11 ou DMS12 du réseau source RS1.

Ceci permet de rendre accessible à partir du réseau d'accueil RS2 les contenus du réseau source RS1. Les adresses utilisées par un serveur de contenus UPnP sont généralement sous forme d'adresse URI (Uniform Ressource Identifier), par exemple
http://192.168.1.10:9000/dina/objectID=1234

La traduction d'adresse opérée par le module relais source DMS-R1 est nommée "traduction source". Elle consiste à remplacer, dans l'adresse URI d'un contenu, l'adresse IP et le port du serveur de contenu dans lequel est stocké ce contenu, par le nom de domaine public de la passerelle domestique GW1 et le numéro de port public affecté au module relais source DMS-R1, de manière à ce que l'adresse URI après traduction soit adaptée pour un accès à ce contenu via le module relais source DMS-R1 et via la passerelle domestique GW1, à partir d'une entité extérieure au réseau source RS1, notamment à partir du module relais local DMS-R2 s'exécutant dans un équipement d'un réseau d'accueil RS2 qui sera décrit plus loin.

Les adresses URI après "traduction source" par le module relais source DMS-R1 seront donc sous la forme:
http://GW1 IP:GW1 PORT/download?uri=CONTENT URI
   où :
   - CONTENT_URI est l'adresse originale URI du contenu, cette adresse comprenant usuellement l'adresse IP locale du serveur de contenus qui stocke ce contenu ainsi que des données identifiant le contenu proprement dit, par exemple sous la forme http://192.168.1.10:9000/dlna/objectID=1234;
   - GW1_IP est un nom de domaine public ou une adresse IP publique statique affectée à la passerelle domestique GW1;
   - GW1_PORT est le port public de la passerelle domestique GW1 via lequel le module relais source DMS-R1 peut être adressé à partir d'une entité extérieure au réseau source RS1.

L'adresse URI ainsi modifiée désigne donc le module relais source DMS-R1 comme serveur de contenus référençant le contenu, c'est-à-dire comme l'entité auprès de laquelle le contenu est susceptible d'être obtenu.

Une telle traduction d'adresse est nécessaire pour éviter d'éventuels conflits avec des serveurs de contenus ou contenus provenant d'un autre réseau, notamment avec ceux du réseau d'accueil RS2. Elle est opérée sur les adresses URI contenues dans des requêtes émises par le module relais source DMS-R1 à destination du réseau d'accueil RS2.

Cette opération de traduction d'adresse est susceptible d'être opérée par le module relais source DMS-R1, dans la mesure où celui-ci a connaissance des paramètres GW1_IP et GW1_PORT.

La transformation inverse, consistant à extraire les adresses URI avant transformation est opérée lorsqu'une requête, émise en provenance du réseau d'accueil RS2, parvient au module relais source DMS-R1. Cette transformation inverse permet donc de restituer l'adresse CONTENT_URI originale, c'est-à-dire l'adresse telle que fournie par le serveur de contenus référençant ce contenu.

Le module relais source DMS-R1 est en outre conçu pour collecter et agréger les métadonnées de contenus associées à des contenus stockés par différents serveurs de contenus DMS11 ou DMS12 du réseau source RS1. Lorsque ces métadonnées comprennent des adresses URI de contenus, une traduction de ces adresses est opérée avant ou après agrégation par le module relais source DMS-R1 selon ce qui vient d'être décrit, par application de la fonction "traduction source". Les métadonnées ainsi modifiées sont transmises vers le module relais local DMS-R2.

Le module relais source DMS-R1 (ou le module relais local DMS-R2) procède en outre à la fusion des arborescences de répertoires de contenus des différents serveurs de contenus DMS11 ou DMS12 du réseau source RS1.

Au lieu de fusionner les arborescences de répertoires de contenus des différents serveurs de contenus DMS11 ou DMS12 du réseau source RS1, il est possible de transmettre au module relais local DMS-R2, pour chaque serveur de contenus du réseau source RS1, une identification de ce serveur accompagnée de l'ensemble de métadonnées représentant l'arborescence de répertoires propre à ce serveur: dans ce cas, l'arborescence de répertoires de contenus qui sera présentée par le module relais local DMS-R2 contiendra un répertoire (de premier niveau dans l'arborescence) propre à chaque serveur de contenus du réseau source RS1 que le module relais local DMS-R2 représente.

D'autres modes de présentation des métadonnées sont envisageables pour la présentation des métadonnées des différents serveurs de contenus DMS11 ou DMS12 du réseau source RS1 que le module relais local DMS-R2 représente.

### Passerelle GW2

La passerelle GW2 est une passerelle pour l'interconnexion du réseau d'accueil RS2 avec le réseau Internet RI. Elle permet aux terminaux du réseau d'accueil RS2 d'accéder au réseau Internet RI. Inversement, la passerelle permet - sous réserve que des droits pour un tel accès soient accordés - à des équipements d'un réseau autre que le réseau d'accueil RS2 de communiquer avec un équipement du réseau d'accueil RS2.

Le module d'interconnexion CG2 met en oeuvre les fonctions d'interconnexion entre le réseau d'accueil RS2 et le réseau Internet RI. Il comprend dans ce but une première interface de communication pour la communication avec les entités du réseau d'accueil RS2 et une deuxième interface de communication pour la communication via le réseau Internet RI, notamment avec les entités externes au réseau d'accueil RS2.

### Set-top-box STB2

La set-top-box STB2 est un équipement associé à la passerelle GW2. Elle comprend :
- d'une part, un agent de connexion HCA conçu pour interroger le serveur de contrôle d'accès HCS et pour, en échange d'un code d'accès affecté à un utilisateur pour un accès distant au réseau source RS1, obtenir des données d'adressage d'un module relais mis en oeuvre par un équipement de ce réseau source RS1 et apte à transmettre une commande à une entité à commander localisée dans le réseau source RS1;
- d'autre part, un module relais DMS-R2 conçu pour, en utilisant les données d'adressage obtenues par l'agent de connexion HCA, transmettre au module relais du réseau source RS1 au moins une commande destinée à l'entité à commander.

Ces deux entités HCA et DMS-R2 sont décrites plus en détail ci-dessous.

### Module relais local DMS-R2

Le module relais local DMS-R2 est un module logiciel destiné à être exécuté par un équipement connecté au réseau d'accueil RS2, par exemple par la STB2.

Le module relais local DMS-R2 est conçu pour coopérer avec le module relais source DMS-R1 en vue de la mise en relation d'entités UPnP du réseau d'accueil RS2 avec une ou des entités du réseau source RS1. Tout comme le module relais source DMS-R1, le module relais local DMS-R2 présente une première interface de communication conforme à UPnP et une deuxième interface de communication non UPnP.

La première interface du module relais local DMS-R2, conforme au protocole UPnP, est une interface logicielle de serveur de contenus UPnP (DMS, Digital Media Serveur), pour d'une part recevoir des requêtes UPnP en provenance d'une entité UPnP du réseau d'accueil RS2, et d'autre part recevoir et traiter les réponses à ces requêtes. Cette interface permet notamment l'activation de fonctions des services définis dans le standard UPnP pour un serveur de contenus UPnP.

En outre, le module relais local DMS-R2 met en oeuvre les fonctions prévues dans le mécanisme de découverte du standard UPnP pour être reconnu en tant que serveur de contenus UPnP local et ainsi recevoir via sa première interface les requêtes UPnP destinées à l'un au moins des serveurs de contenus UPnP du réseau source RS1.

Dans ce but, le module relais local DMS-R2 utilise un message SSDP pour déclarer sa présence dans le réseau RS2 en tant que serveur de contenus. Le module relais local DMS-R2 déclare des capacités qui sont celles des serveurs de contenus UPnP du réseau source RS1, c'est-à-dire les "services" - au sens du standard UPnP - proposés par ces serveurs.

De manière connue, le protocole de découverte prévu dans le standard UPnP se déroule comme suit. Lorsque le module relais local DMS-R2 est initialisé et se connecte au réseau RS2, il se signale aux dispositifs UPnP de ce réseau par l'envoi d'un message M1 indiquant sa présence. Un tel message M1 est usuellement un message 'ssdp:alive' conforme au protocole SSDP (Simple Service Discovery Protocol). Pour la définition de ces messages, on peut par exemple se référer au document nommé "draft-cai-ssdp-v1-02" de l'IETF ('Internet Engineering Task Force'). Ce message M1 est diffusé dans le réseau en mode multicast. De ce fait, il est reçu par le dispositif de restitution DMP2 ou par tout "Point de contrôle" UPnP qui se trouverait dans le réseau RS2. Ainsi, pour les entités UPnP du réseau RS2, tout se passe comme si ce module relais local DMS-R2 était effectivement un serveur de contenus UPnP, localisé dans ce réseau RS2.

La deuxième interface du module relais local DMS-R2 utilise un protocole distinct du protocole UPnP et approprié pour envoyer ou recevoir des requêtes non UPnP échangées avec une entité ne faisant pas partie du réseau d'accueil RS2. Le protocole utilisé ici est par exemple le protocole HTTP.

Via sa deuxième interface, le module relais local DMS-R2 est apte également à recevoir et retransmettre des requêtes HTTP ne transportant pas de requête de type "web service". Il s'agit notamment de requêtes de transmission de contenus ou de requête d'obtention de contenu ne nécessitant pas de conversion vers une requête ou réponse UPnP.

Le module relais local DMS-R2 est conçu pour établir, via les modules d'interconnexion CG2 et CG1, une liaison de communication avec le module relais source DMS-R1. Le module relais local DMS-R2 communique avec le module relais source DMS-R1 par exemple au moyen de requêtes HTTP transmises via une telle liaison.

Pour raisons de sécurité, il est préférable cependant d'utiliser pour la communication entre les modules relais DMS-R1 et DMS-R2 des requêtes HTTPS. L'utilisation du protocole HTTPS implique que les requêtes HTTP émises par le module relais local DMS-R1 (respectivement DMS-R2) soient encapsulées dans des requêtes conformes au protocole HTTPS et transmises sous cette forme au module d'interconnexion CG1 (respectivement CG2). Inversement, à réception d'une requête HTTPS en provenance du module d'interconnexion CG2 (respectivement CG1), le module relais local DMS-R2 dés-encapsule cette requête pour générer une requête conforme au protocole HTTP (respectivement DMS-R1).

En alternative à l'utilisation d'un protocole sécurisé tel que HTTPS, il est également envisageable, pour la sécurisation de la liaison entre le module relais local DMS-R2 et le module relais source DMS-R1, de procéder à l'établissement d'un tunnel sécurisé (VPN, Virtual Private Networking).

Tout comme le module relais source DMS-R1, le module relais local DMS-R2 met en oeuvre une fonction de traduction des adresses de contenus fournies par le module relais source DMS-R1. Ceci permet de rendre accessible à partir du réseau d'accueil RS2 les contenus du réseau source RS1 via les modules relais DMS-R1 et DMS-R2.

La traduction d'adresse opérée par le module relais local DMS-R2 est nommée "traduction locale". Elle consiste à remplacer dans l'adresse URI d'un contenu, l'adresse IP et le port du serveur désigné dans cette adresse - c'est-à-dire de l'entité auprès de laquelle le contenu peut être obtenu - par l'adresse IP et le port du module relais local DMS-R2. Cette adresse IP est en fait l'adresse de l'équipement du réseau d'accueil RS2 qui exécute le module relais local DMS-R2 et module relais local DMS-R2, le port étant un port de communication affecté au module relais local DMS-R2.

L'entité désignée dans l'adresse URI traduite est apte à communiquer avec le module relais source DMS-R1, destinataire visé pour les requêtes d'accès à un contenu susceptibles d'être émises à partir du réseau d'accueil RS2.

Les adresses URI après traduction par le module relais local DMS-R2 seront donc sous la forme:
http://RCG IP:RCG PORT/downland?uri=CONTENT URI R1
   où :
   - CONTENT_URI_R1 est l'adresse URI telle que fournie par le module relais source DMS-R1,
   - RCG_IP est l'adresse IP privée du module relais local DMS-R2, en l'occurrence l'adresse IP de la set-top-box STB2 hébergeant ce module relais local DMS-R2;
   - RCG_PORT est le port privé du module relais local DMS-R2, en l'occurrence le port de la set-top-box STB2 via lequel ce module relais local DMS-R2 peut être adressé.

L'adresse URI ainsi modifiée désigne donc pour une entité du réseau local RS2 le module relais local DMS-R2 comme serveur de contenus référençant le contenu, c'est-à-dire comme l'entité auprès de laquelle le contenu considéré est susceptible d'être obtenu.

Cette traduction d'adresse est opérée sur les adresses URI contenues dans des requêtes provenant du module relais source DMS-R1 et parvenant au module relais local DMS-R2.

La transformation inverse, consistant à extraire les adresses URI telles qu'elles étaient avant la "traduction locale" - c'est-à-dire à extraire l'adresse CONTENT_URI_R1 telle que fournie par le module relais source - est opérée sur les adresses URI contenues dans une requête, émise en provenance du réseau d'accueil RS2, parvenant au module relais local DMS-R2 et devant être transférée au module relais source DMS-R1. Cette opération inverse est effectuée soit par le module relais source DMS-R1, soit par le module relais local DMS-R2.

### Serveur de contrôle d'accès HCS

Le serveur de contrôle d'accès HCS est responsable de la génération et de la gestion des codes d'accès utilisés dans l'invention. Il comprend dans ce but différents modules logiciels prévus pour :
- recevoir et traiter une demande de code d'accès en provenance d'un terminal,
- affecter, à réception d'une telle demande, un code d'accès à un utilisateur pour un accès distant à un premier réseau RS1 dans lequel se trouve au moins une entité à commander,
- recevoir en provenance d'un équipement d'un deuxième réseau RS2 un code d'accès;
- fournir, en échange du code d'accès reçu de cet équipement, des données d'adressage d'un premier module relais mis en oeuvre dans le premier réseau RS1 et apte à transmettre une commande à l'entité à commander, les données d'adressage fournies par le serveur de contrôle d'accès HCS étant utilisables par un deuxième module relais mis en oeuvre dans le deuxième réseau RS2 afin de transmettre au premier module relais au moins une commande destinée à l'entité à commander.

Le serveur de contrôle d'accès HCS est accessible à travers le réseau Internet RI par la passerelle GW2, le terminal mobile MT ou tout autre équipement doté de moyens de navigation via le réseau Internet: un tel équipement peut donc émettre des requêtes à destination du serveur de contrôle d'accès HCS.

Le serveur de contrôle d'accès HCS gère une base de données dans laquelle sont stockées, pour chaque utilisateur abonné au service d'accès distant et pour chaque réseau source visé, des données d'authentification affectées à cet utilisateur pour l'accès distant à ce réseau source.

Ces données d'authentification sont mémorisées en association avec des données d'adressage d'un module relais de ce réseau source, via lequel un accès distant aux contenus référencés par les serveurs de contenus de ce réseau source est possible. Dans l'exemple de réalisation décrit ici, ce sont les données d'adressage du module relais source DMS-R1 qui sont stockées en association avec des données d'authentification de l'utilisateur U1. Ces données d'adressage comprennent par exemple l'adresse IP (ou le nom de domaine à partir duquel cette adresse IP peut être obtenue) et le numéro de port de la passerelle GW1 du réseau source RS1 via lequel ce module relais peut être adressé.

Le serveur de contrôle d'accès HCS est conçu pour réceptionner des demandes de connexion à un réseau source, provenant d'un module applicatif d'un terminal (notamment du module applicatif HCR décrit ci-dessous) et pour fournir, sous condition d'authentification de l'utilisateur requérant l'accès au réseau source visé, un code d'accès, représentatif d'une autorisation d'accès accordée à cet utilisateur pour l'accès distant au réseau source visé.

Le code d'accès est par exemple un code d'accès alphanumérique. Il est unique, par exemple généré aléatoirement.

Ce code d'accès est à usage unique: il est accordé / valide pour une connexion unique entre un module relais d'un réseau d'accueil et un module relais d'un réseau source. Ce code est invalidé automatiquement par le serveur de contrôle d'accès HCS après établissement de la liaison de communication pour laquelle ce code a servi au contrôle d'accès. Cette invalidation s'effectue par exemple en enregistrant en association avec ce code une valeur représentative de l'état « valide » ou « invalide » (valeur 0 ou 1 par exemple) et en modifiant cette valeur après qu'un accès ait été autorisé sur présentation de ce code.

Ce code d'accès est de préférence temporaire : il est invalidé automatiquement par le serveur de contrôle d'accès HCS après une période de temps maximale prédéfinie ou après avoir été transmis à un agent de connexion tel que l'agent de connexion HCA ou après établissement de la liaison de communication ou lorsque cette liaison prend fin. Le code d'accès est par exemple valable pour l'établissement d'une seule liaison de communication.

Chaque code d'accès généré par le serveur de contrôle d'accès HCS est stocké en mémoire en association avec les données d'adressage du module relais d'un réseau source pour l'accès

En variante de réalisation, le serveur de contrôle d'accès HCS comprend un serveur vocal interactif conçu pour fournir un code d'accès par annonce vocale, après authentification de l'utilisateur, par exemple au moyen d'un code PIN.

### Agent de connexion HCA

L'agent de connexion HCA est un module logiciel, destiné à être intégré dans un équipement du réseau d'accueil RS2 et à être exécuté par un processeur de données de cet équipement. Dans le mode de réalisation décrit ici, cet agent de connexion HCA est intégré dans la set-top-box STB2.

Cet agent de connexion HCA est conçu pour obtenir d'un utilisateur un code d'accès représentatif d'une autorisation d'accès à un réseau source, pour fournir au serveur de contrôle d'accès HCS le code d'accès obtenu de l'utilisateur et pour obtenir en échange, sous réserve que le code d'accès fourni soit valide et non expiré, des données d'adressages d'un module relais du réseau source visé.

Cet agent de connexion HCA est également conçu pour dialoguer avec le module relais local DMS-R2 et lui fournir des données d'adressages d'un module relais source DMS-R1, obtenues auprès du serveur de contrôle d'accès HCS, afin que ce module relais local DMS-R2 puisse établir une communication avec le module relais source DMS-R1 en question.

### Terminal mobile MT

Le terminal mobile MT a l'architecture classique d'un terminal mobile: écran, processeur, mémoire, interface radio, etc. On suppose qu'il est notamment doté d'une interface de connexion au réseau d'accueil RS2, par exemple une interface Wifi ou de réseau de téléphonie mobile de troisième génération (réseau 3G).

Le terminal mobile MT comprend en outre un module applicatif HCR, comprenant des moyens d'interrogation du serveur de contrôle d'accès HCS afin d'obtenir un code d'accès affecté à un utilisateur pour un accès distant à un premier réseau distant (en l'occurrence le réseau source RS1) dans lequel se trouve au moins une entité à commander, le code d'accès ainsi obtenu étant utilisable par un équipement d'un deuxième réseau (en l'occurrence le réseau d'accueil RS2) pour obtenir auprès du serveur de contrôle d'accès HCS des données d'adressage d'un premier module relais, mis en oeuvre dans le premier réseau et apte à transmettre une commande à l'entité à commander.

Plus précisément, le module applicatif HCR est conçu pour obtenir d'un utilisateur des données d'authentification affectées à cet utilisateur pour l'accès distant à un réseau source. Le module applicatif HCR est également conçu pour envoyer au serveur de contrôle d'accès HCS une demande de connexion, contenant des données d'authentification d'un utilisateur et pour obtenir en retour, sous réserve que ces données d'authentification soient valides, un code d'accès, représentatif d'une autorisation d'accès à un réseau source, pour l'accès duquel ces données d'authentifications ont été affectées à l'utilisateur.

Le code d'accès ainsi obtenu sera utilisé par une entité du réseau d'accueil RS2 pour obtenir auprès du serveur de contrôle d'accès HCS, en échange de ce code d'accès, des données d'adressage d'un premier module relais, exécuté par un équipement du premier réseau et apte à transmettre une commande à ladite au moins une entité.

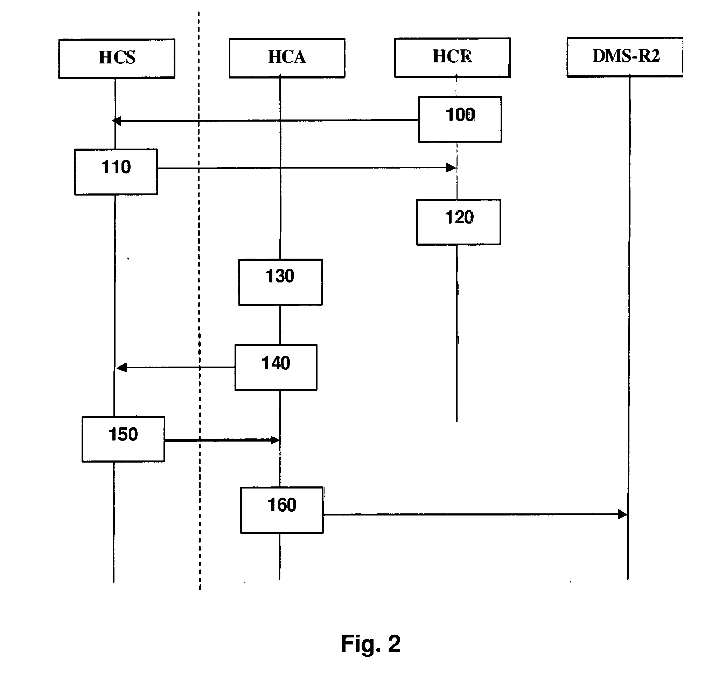

Un mode de réalisation du procédé selon l'invention est maintenant décrit par référence aux figures 2 à 4. Ce procédé comprend les étapes 100 à 370. Cet ensemble d'étapes est susceptible d'être exécuté un nombre quelconque de fois, à chaque fois qu'un accès à un contenu du réseau source RS1 à partir d'un équipement du réseau d'accueil RS2 est souhaité et/ou à chaque fois qu'une liaison de communication entre le réseau source et le réseau d'accueil doit être établie via les modules relais DMS-R1 et DMS-R2.

Les étapes 100 à 150, représentées à la figure 2, constituent une première phase de procédé au cours de laquelle sont obtenues les données d'adressage permettant au module relais DMS-R2 du réseau d'accueil RS2 d'établir une liaison de communication avec le module relais DMS-R1 du réseau source.

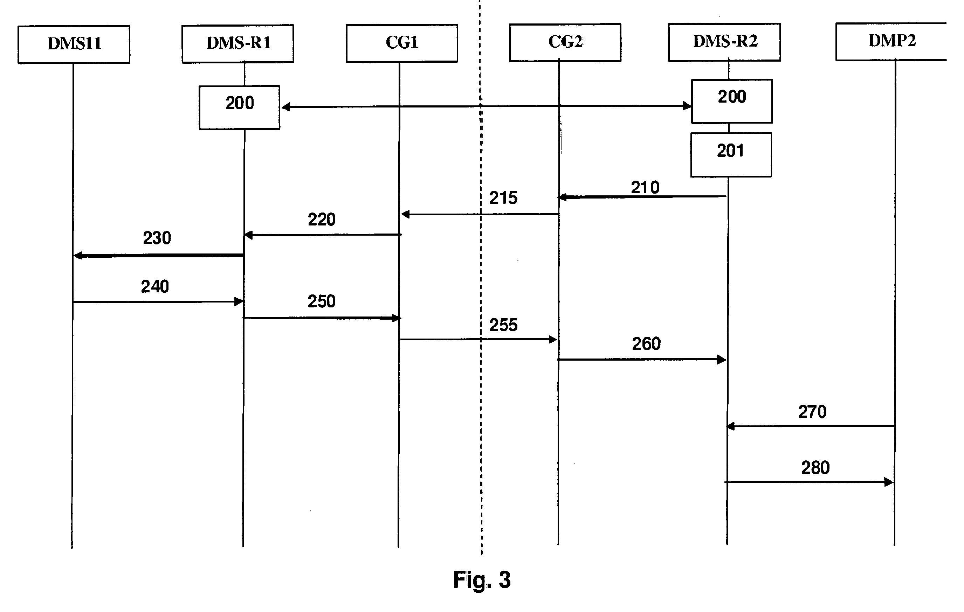

Les étapes 200 à 280, représentées à la figure 3, constituent une deuxième phase de procédé, au cours de laquelle est établie une communication entre le module relais DMS-R1 du réseau source et le module relais DMS-R2 du réseau d'accueil RS2, ce dernier obtenant les métadonnées des contenus référencés par les serveurs de contenus du réseau source.

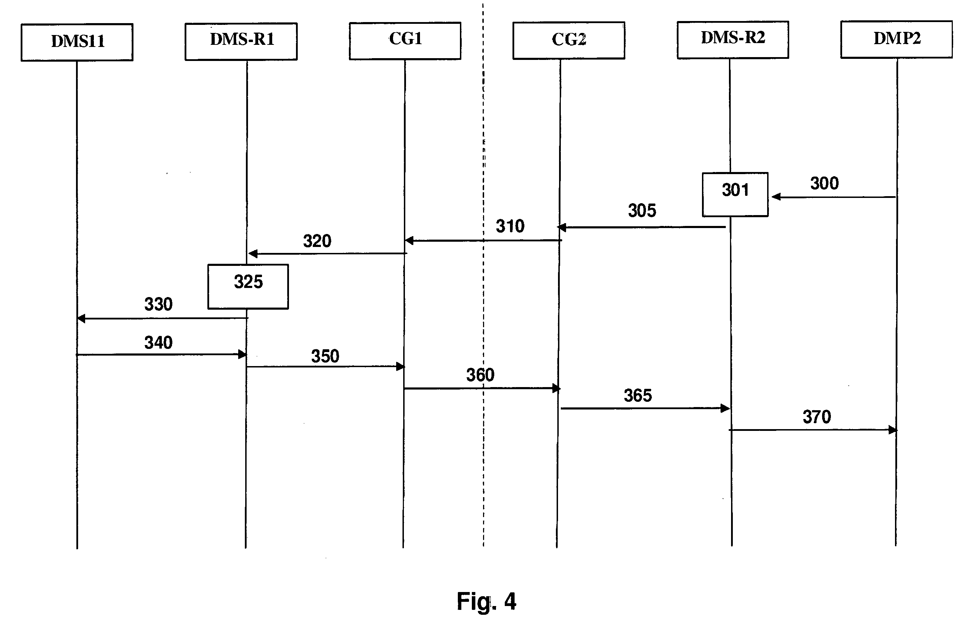

Les étapes 300 à 370, représentées à la figure 4, constituent une troisième phase de procédé, au cours de laquelle un contenu, référencé par un serveur de contenus du réseau source, est restitué sur un équipement du réseau d'accueil. Cette troisième phase est répétée pour chaque contenu, référencé par un serveur de contenus du réseau source, à restituer sur un équipement du réseau d'accueil.

Le procédé est décrit dans le cas où un utilisateur U1 se trouve physiquement dans le réseau d'accueil RS2 et souhaite partager ses contenus. On suppose que son terminal mobile MT est déjà connecté en WiFi au réseau d'accueil RS2.

### Première phase

A l'étape 100, l'utilisateur U1 déclenche l'exécution du module applicatif HCR. Le module applicatif HCR affiche une interface utilisateur sur le terminal mobile MT pour demander à l'utilisateur U1 de saisir des données d'authentification affectées à cet utilisateur pour l'accès distant au réseau source RS1: par exemple un couple identifiant / mot de passe, associé de manière univoque au réseau source RS1 et à l'utilisateur U1.

Le module applicatif HCR établit une liaison sécurisée, au moyen par exemple du protocole HTTPS avec le serveur de contrôle d'accès HCS et émet une demande de connexion au réseau source à destination du serveur de contrôle d'accès HCS, via la liaison sécurisée établie, cette demande de connexion comprenant les données d'authentification saisies par l'utilisateur U1.

A l'étape 110, le serveur de contrôle d'accès HCS reçoit la demande de connexion et détermine si un réseau source est associé à ces données d'authentification. Si aucun réseau ou aucun utilisateur source n'est associé à ces données d'authentification, le serveur de contrôle d'accès HCS renvoie un code d'erreur : la mise en relation avec le réseau source ne peut pas être effectuée et le procédé selon l'invention se termine.

Dans le cas contraire, le serveur de contrôle d'accès HCS génère un code d'accès temporaire unique, par exemple un code d'accès aléatoire, puis mémorise ce code d'accès temporaire en association avec des données d'adressage d'un module relais du réseau source auquel les données d'authentification reçues sont associées. Enfin, le serveur de contrôle d'accès HCS envoie au module applicatif HCR le code d'accès temporaire.

A l'étape 120, le module applicatif HCR affiche le code d'accès temporaire dans une interface utilisateur du terminal mobile MT.

A l'étape 130, l'utilisateur U1 active alors, par exemple via un menu de la set-top-box STB2, une fonction de partage de contenus distants: cette activation déclenche l'exécution par la set-top-box STB2 de l'agent de connexion HCA. L'agent de connexion HCA demande à l'utilisateur U1 de saisir dans une interface utilisateur de la set-top-box STB2 le code d'accès temporaire qu'il a reçu via son mobile. L'utilisateur U1 saisit ce code d'accès temporaire, en utilisant par exemple une télécommande associée à la set-top-box STB2.

A l'étape 140, l'agent de connexion HCA envoie ensuite ce code d'accès temporaire au serveur de contrôle d'accès HCS via une liaison sécurisée (établie par exemple au moyen du protocole HTTPS), afin d'obtenir en retour des données d'adressage d'un module relais du réseau source visé.

A l'étape 150, le serveur de contrôle d'accès HCS vérifie que le code d'accès temporaire est valide, c'est-à-dire que ce code d'accès fait partie d'une liste de codes d'accès valides, pour lesquels l'état enregistré est « valide », et que ce code d'accès n'a pas expiré.

Dans l'affirmative, le serveur de contrôle d'accès HCS fournit en retour à l'agent de connexion HCA des données d'adressage d'un module relais du réseau source, données enregistrées en association avec le code d'accès temporaire.

Si, au contraire, le code d'accès temporaire n'est pas valide ou a expiré (c'est-à-dire que ce code d'accès temporaire n'est pas présent dans la liste de codes d'accès valides et non expirés), le serveur de contrôle d'accès HCS envoie un message d'erreur à l'agent de connexion HCA. Un message d'erreur est dans ce cas affiché dans une interface utilisateur de la set-top-box STB2 et le procédé selon l'invention se termine.

A l'étape 160, l'agent de connexion HCA fournit les données d'adressage au module relais DMS-R2 du réseau d'accueil afin que celui-ci établisse une connexion sécurisée avec le module relais DMS-R1 du réseau source RS1. Ces données d'adressages contiennent notamment l'adresse IP publique GW1_IP et le port public GW1_PORT utilisés par le module relais DMS-R1 lors de l'opération de "traduction source".

### Deuxième phase

A l'étape 200, suite à la réception de données d'adressage du module relais du réseau source RS1, le module relais local DMS-R2 utilise ces données d'adressage pour établir une liaison de communication avec ce module relais source, conformément à la méthode de communication choisie pour le dialogue entre les modules relais DMS-R1 et DMS-R2. On suppose dans la suite de la description, que les modules relais DMS-R1 et DMS-R2 communiquent entre eux par requêtes d'invocation de Web service, transportées en utilisant le protocole HTTP et encapsulées dans des requêtes HTTPS.

Une fois la liaison de communication établie entre les deux modules relais, le module relais local DMS-R2 obtient du module relais source DMS-R1 sur les capacités et caractéristiques des serveurs de contenus du réseau source: ces informations ont été reçues par le module relais source DMS-R1 lors de la mise en oeuvre, par de module relais source DMS-R1 et les différents serveurs de contenus du réseau source, du mécanisme de découverte de dispositifs UPnP.

A l'étape 201, le module relais local DMS-R2 émet ensuite des requêtes SSDP, conformément au mécanisme de découverte UPnP, pour signaler aux points de contrôle UPnP (Digital Media Controller) du réseau d'accueil RS2 sa présence et pour déclarer sa présence et ses capacités en tant que serveur de contenus UPnP. En l'occurrence, le module relais local DMS-R2 déclare des capacités qui sont celles des serveurs de contenus UPnP du réseau source RS1 qu'il représente. Le module relais local DMS-R2 est alors vu par tout "point de contrôle" UPnP ou par tout "Digital Media Player" UPnP comme un serveur de contenus UPnP du réseau d'accueil RS2. Le module relais local DMS-R2 procède de même pour les autres entités UPnP du réseau source qu'il représente dans le réseau d'accueil. Le module relais local DMS-R2 peut alors recevoir des requêtes UPnP destinées à une entité qu'il représente.

A l'étape 210, le module relais local DMS-R2 génère une requête UPnP, nommée "Browse", pour l'obtention des métadonnées des contenus référencés par les serveurs de contenus du réseau source RS1. La requête UPnP "Browse" est convertie en une requête d'invocation de Web service, encapsulée dans une requête HTTPS puis transmise 215 au module relais source DMS-R1, via les modules d'interconnexion CG2 et CG1.

A l'étape 220, la requête HTTPS d'obtention de métadonnées encapsulée est reçue par le module relais source DMS-R1, qui la dés-encapsule et en extrait une requête UPnP "Browse", identique à la requête UPnP générée à l'étape 200 par le module relais local DMS-R2. Le module relais source DMS-R1 traite ensuite cette requête: le traitement opéré consiste à émettre aux serveurs de contenus UPnP du réseau une requête UPnP pour l'obtention des métadonnées des contenus accessibles respectivement via chacun de ces serveurs de contenu. En l'occurrence, une requête UPnP nommée "Browse" est envoyée à l'étape 230 à chacun des serveurs de contenus DMS11 et DMS12.

A l'étape 240, à réception des réponses des serveurs de contenus DMS11 et DMS12 à la requête "Browse" UPnP, le module relais source DMS-R1 agrège les métadonnées reçues des différents serveurs de contenus DMS11 ou DMS12 du réseau source RS1. Le module relais source DMS-R1 effectue en outre, selon ce qui a été décrit plus haut pour ce module, une traduction ("traduction source") des adresses URI de contenus contenues dans ces métadonnées, de manière à ce que ces adresses soient utilisables par un module UPnP du réseau d'accueil RS2. En l'occurrence, compte tenu de la nature de cette traduction, ces adresses traduites désignent toutes le module relais source DMS-R1 comme entité auprès de laquelle ces contenus peuvent être obtenus.

A l'étape 250, le module relais source DMS-R1 génère un message de réponse à la requête reçue à l'étape 220, comprenant les métadonnées telles qu'agrégées et modifiées à l'étape 240. Ce message de réponse est envoyée selon le même protocole ou la même méthode que celui ou celle utilisée pour l'envoi de cette requête, c'est-à-dire par requête de type "web service". Ce message de réponse est transporté conformément au protocole HTTP, encapsulé dans une requête HTTPS et transmis 255 au module relais local DMS-R2 via les modules d'interconnexion CG2 et CG1.

A l'étape 260, le message de réponse parvient au module relais local DMS-R2 qui le traite. Il effectue, selon ce qui a été décrit plus haut pour ce module, une traduction ("traduction locale") des adresses URI de contenus contenues dans ces métadonnées, de manière à ce que ces adresses soient utilisables par un module UPnP du réseau d'accueil RS2 uniquement en passant par le module relais local DMS-R2. En l'occurrence, compte tenu de la nature de cette traduction, ces adresses traduites désignent toutes le module relais local DMS-R2 comme entité auprès de laquelle ces contenus peuvent être obtenus.

Puis le module relais local DMS-R2 enregistre l'ensemble des métadonnées reçues dans une mémoire ou un fichier de données, par exemple sur le support d'enregistrement SPR. Ce fichier forme une base de données pour le stockage de métadonnées.

A l'étape 270, le module relais local DMS-R2 reçoit du dispositif de restitution DMP2 une requête UPnP "Browse" pour l'obtention des métadonnées des contenus référencés par le module relais local DMS-R2, c'est-à-dire des contenus référencés par les serveurs de contenus du réseau source RS1 que le module relais local DMS-R2 représente.

A l'étape 280, le module relais local DMS-R2 transmet en réponse au dispositif de restitution DMP2 les métadonnées demandées, correspondant aux métadonnées des contenus référencés par les serveurs de contenus DMS11 ou DMS12 du réseau source RS1.

Le module relais local DMS-R2 fournit ainsi dans les métadonnées transmises, pour chaque contenu référencé par un serveur de contenus du réseau source, une adresse désignant une entité du réseau d'accueil RS2, apte à transmettre au module relais source DMS-R1 une requête d'accès audit contenu, comme entité auprès de laquelle le contenu considéré est susceptible d'être obtenu: cette entité est en l'occurrence le module relais local DMS-R2.

### Troisième phase

A l'étape 300, suite à une consultation par un utilisateur U1 des métadonnées fournies par le module relais local DMS-R2 et une sélection effectuée par cet utilisateur U1 d'un contenu à restituer, une requête d'obtention d'un des contenus sélectionné est émise par dispositif de restitution UPnP, par exemple par le dispositif de restitution DMP2 localisé dans l'équipement T21.

Cette requête d'obtention de contenu est une requête de type "GET", conforme au protocole HTTP. Conformément au standard UPnP, cette requête contient une adresse URI du contenu à restituer.

Du fait que les adresses URI contenues dans les métadonnées fournies par le module relais local DMS-R2 ont subi la "traduction locale", cette adresse URI désigne le module relais local DMS-R2 comme l'entité auprès de laquelle le contenu considéré est susceptible obtenu.

A l'étape 301, la requête HTTP "GET" d'obtention de contenu est reçue par l'entité désignée dans l'adresse URI, c'est-à-dire par le module relais local DMS-R2.

Le module relais local DMS-R2 extrait de l'adresse URI reçue l'adresse URI, telle que générée à l'étape 240 par le module relais source DMS-R1 lors du transfert des métadonnées: l'adresse extraite désigne cette fois le module relais source DMS-R1 comme entité auprès de laquelle le contenu considéré peut être obtenu.

A l'étape 305, le module relais local DMS-R2 génère ensuite une requête HTTP "GET", contenant l'adresse URI extraite, encapsule cette requête dans une requête HTTPS puis la transmet à destination du module relais source DMS-R1. Cette requête HTTPS est transmise 310, 320 au module relais source DMS-R1 via les modules d'interconnexion CG1 et CG2.

A l'étape 325, la requête HTTP "GET" d'obtention de contenu est reçue par le module relais source DMS-R1 qui, la dés-encapsule puis extrait de l'adresse URI reçue l'adresse URI originale telle qu'obtenue du serveur de contenus par le module relais source DMS-R1 lors de l'étape 230: l'adresse extraite désigne cette fois le serveur de contenu DMS11 comme entité auprès de laquelle le contenu considéré peut être obtenu.

A l'étape 330, le module relais source DMS-R1 génère ensuite une requête HTTP "GET", contenant l'adresse URI extraite puis la transmet à destination du serveur de contenu (par exemple le serveur DMS11) identifié dans cette adresse URI, c'est-à-dire dans le champ "CONTENT_URI" qui a subsisté aux différentes traductions d'adresse.

A l'étape 340, la requête HTTP "GET" de restitution parvient ainsi au serveur de contenu DMS11 qui la traite en renvoyant au module relais source DMS-R1 les données du contenu sous forme de paquets de données transmis au moyen du protocole HTTP.

A l'étape 350, après réception de la requête HTTP "GET", le module relais source DMS-R1 émet à destination du module relais local DMS-R2 les paquets de données: ces paquets transitent 360 via les modules d'interconnexion CG1 et CG2.

A l'étape 365, ces paquets HTTP sont reçus par le module relais local DMS-R2 qui les transmet 370 au dispositif de restitution DMP2.

Le rôle du module relais local est principalement utilisé pour présenter une interface de commande, conforme au protocole qui est utilisé pour commander l'entité distante dans le réseau source: ce module relais local sert donc de représentant, dans le réseau d'accueil, de l'entité distante à commander (en l'occurrence les serveurs de contenus DMS11 et DMS12). En association avec le module relais source DMS-R1, le module relais local DMS-R2 sert de relais de communication vis-à-vis des serveurs de contenus du réseau source.

Il est à noter que, aussi bien le module relais source DMS-R1 que le module relais local DMS-R2 peuvent représenter plusieurs entités distantes (en l'occurrence plusieurs serveurs de contenus DMS11 et DMS12).

Grâce au module applicatif HCR du terminal mobile MT et la procédure de génération de code d'accès, un utilisateur Bob peut accéder à des contenus stockés dans son réseau domestique à partir d'un terminal / équipement d'un autre utilisateur Alice, raccordé à un autre réseau domestique. Ainsi Bob peut partager avec Alice des contenus, notamment en demandant une restitution de ces contenus sur un terminal / équipement d'Alice, et ce bien que les réseaux domestiques de Bob et Alice soient dissociés géographiquement et non interconnectés.

Dans la mise en oeuvre proposée, le terminal mobile MT n'est utilisé que pour la phase d'obtention du code d'accès: on économise ainsi les ressources de ce terminal mobile MT. Le module applicatif HCR du terminal mobile MT est en effet peu consommateur de ressource. Les phases d'interrogation du module relais source sont elles mises en oeuvre dans un équipement plus puissant tel que la set-top-box STB2 qui est présente de manière permanente dans le réseau d'accueil RS2.

### Variantes de réalisation.

Selon une première variante, le serveur de contrôle d'accès HCS est conçu pour vérifier si l'équipement, qui demande des données d'adressage en échange d'un code d'accès, est identifié par la même adresse que le terminal auquel ce même code d'accès a été fourni précédemment par ledit serveur. Cette première variante renforce en effet la sécurité du procédé selon l'invention.

En effet, la saisie d'un code d'accès temporaire dans une interface utilisateur de la set-top-box STB2 n'assure pas une sécurité optimale car il existe une probabilité, même très faible, qu'un autre utilisateur saisisse le même code d'accès avant que ce code d'accès n'expire. Il est ainsi prévu que le serveur de contrôle d'accès HCS met en oeuvre une fonction de filtrage des adresses IP de la manière suivante.

Etant donné que le terminal mobile MT et la set-top-box STB2 sont dans le même réseau, et dans l'hypothèse où une adresse IP locale est affectée au terminal mobile après connexion au réseau d'accueil (ce qui est le cas lorsqu'il est connecté en Wifi), les requêtes envoyées par ces deux équipements, telles que reçues par le serveur de contrôle d'accès serveur de contrôle d'accès HCS, ont la même adresse IP source (adresse IP de l'équipement émetteur de la requête) qui est l'adresse IP publique de la passerelle GW2.

Ainsi, à réception d'une requête de génération du code d'accès en provenance d'un terminal mobile, le serveur de contrôle d'accès HCS mémorise en association avec le code d'accès l'adresse IP de l'équipement émetteur de cette requête de génération de code d'accès. Puis, à réception d'une requête de transmission des données d'adressage du module relais source DMS-R1, le serveur de contrôle d'accès HCS vérifiera préalablement que l'adresse IP de l'équipement émetteur de cette requête de transmission est identique à l'adresse IP précédemment mémorisée en association avec le code d'accès en question.

Selon une deuxième variante de réalisation de l'invention, un mécanisme de surveillance de la présence du module applicatif HCR du terminal mobile MT est mis en oeuvre par l'agent de connexion HCA. Dans ce but, l'agent de connexion HCA comprend
- des moyens de réception et de traitement d'un message, émis par un terminal connecté au réseau d'accueil RS2, comprenant un code d'accès,
- des moyens pour inhiber l'envoi de commande à une entité du réseau source RS1 si aucun message, comprenant un code d'accès affecté pour un accès distant au réseau source RS1, n'a été reçu pendant un intervalle de temps prédéfini.

Selon un mode de réalisation, le module applicatif HCR diffuse à intervalle de temps régulier, en mode multicast des messages, contenant le code d'accès temporaire reçu afin de signaler que le terminal via lequel ce code a été obtenu est toujours connecté et donc présent dans le réseau d'accueil. Ces messages sont par exemple émis conformément au protocole SSDP ("Simple Service Discovery Protocol").

Lorsque le terminal mobile MT se déconnectera du réseau d'accueil RS2, l'agent de connexion HCA ne recevra plus aucune requête SSDP et mettra fin automatiquement à la liaison de communication initiée entre les modules relais DMS-R2 et DMS-R1 si aucun message n'a été reçu pendant un intervalle de temps prédéfini pour un code d'accès donné pour lequel des données d'adressage ont été reçues par l'agent de connexion HCA. L'agent de connexion HCA teste donc à réception d'un message SSDP quel est le code d'accès présent dans ce message.

Ainsi, si l'utilisateur U1 quitte le réseau d'accueil RS2 en oubliant de désactiver la fonction de partage sur la set-top-box STB2, il ne sera plus possible à un autre utilisateur d'accéder aux contenus de la maison source.

Selon une troisième variante de réalisation de l'invention, le serveur de contrôle d'accès HCS est conçu pour, à réception d'un code d'accès en provenance d'un équipement requérant des données d'adressage, envoyer au terminal auquel ce même code d'accès a été fourni, un message pour demander à un utilisateur de ce terminal s'il autorise l'envoi audit équipement de ces données d'adressage.

Cette troisième variante a également pour but de renforcer la sécurité et est mise en oeuvre de la manière suivante. Au moment où l'agent de connexion HCA interroge le serveur de contrôle d'accès HCS, le serveur de contrôle d'accès HCS envoie au terminal mobile MT pour lequel le code d'accès a été généré, une demande d'autorisation à l'utilisateur (message envoyé en mode "Push" sur le terminal mobile MT). Si l'utilisateur confirme qu'il autorise l'envoi des données d'adressage du module relais source DMS-R1 et l'établissement d'une liaison de communication entre un équipement du réseau d'accueil et ce module relais source DMS-R1, le serveur de contrôle d'accès HCS est autorisé à transmettre à l'agent de connexion HCA les données d'adressage du module relais du réseau source visé.

La troisième variante suppose que le terminal mobile MT dispose d'un mode de communication par message en mode "push" permettant au serveur de contrôle d'accès HCS d'envoyer des messages vers le terminal mobile MT.

Les différentes variantes qui viennent d'être présentées sont combinables entre elles pour la mise en oeuvre de l'invention.

## Revendications

1. Procédé de commande à distance d'au moins une entité (DMS11, DMS12) d'un premier réseau (RS1) à partir d'un deuxième réseau (RS2), le procédé comprenant,
- une étape d'obtention, en échange d'un code d'accès affecté à un utilisateur pour un accès distant au premier réseau, de données d'adressage d'un premier module relais (DMS-R1) mis en oeuvre dans le premier réseau, apte à transmettre une commande à ladite au moins une entité,
- une étape d'établissement, par un deuxième module relais (DMS-R2) mis en oeuvre dans le deuxième réseau en utilisant lesdites données d'adressage, d'une liaison de communication avec le premier module relais (DMS-R1);
- une étape transmission au premier module relais, par le deuxième module relais (DMS-R2), via ladite liaison de communication d'au moins une commande destinée à ladite entité.

2. Procédé selon la revendication 1, dans lequel les données d'adressage comprennent une adresse IP et un numéro de port de communication.

3. Procédé selon la revendication 1, dans lequel les données d'adressage sont obtenues auprès d'un serveur ayant fourni ledit code d'accès audit utilisateur.

4. Procédé selon la revendication 1, dans lequel ladite entité est un serveur de contenu, le procédé comprenant une étape de fourniture d'une adresse d'au moins un contenu référencé par ledit serveur de contenus, ladite adresse désignant le deuxième module relais comme entité auprès de laquelle ledit contenu est susceptible d'être obtenu.

5. Procédé selon la revendication 1, comprenant une étape de mise en oeuvre d'un mécanisme de découverte par le deuxième module relais (DMS-R2) afin que ce deuxième module relais soit reconnu en tant serveur de contenus du deuxième réseau local.

6. Procédé selon la revendication 1, dans lequel ledit code d'accès est temporaire et/ou à usage unique.

7. Equipement (STB2) de commande à distance d'au moins une entité (DMS11, DMS12) d'un premier réseau (RS1) à partir d'un deuxième réseau (RS2), l'équipement comprenant,
- des moyens (HCA) d'obtention, en échange d'un code d'accès affecté à un utilisateur pour un accès distant au premier réseau, de données d'adressage d'un premier module relais (DMS-R1) mis en oeuvre dans le premier réseau (RS1) et apte à transmettre une commande à ladite au moins une entité,
- un deuxième module relais (DMS-R2) configuré pour utiliser lesdites données d'adressage en établissant une liaison de communication avec le premier module relais (DMS-R1) et pour transmettre au premier module relais au moins une commande destinée à ladite entité.

8. Equipement (STB2) selon la revendication 7, comprenant des moyens d'interrogation d'un serveur ayant fourni ledit code d'accès audit utilisateur.

9. Equipement (STB2) selon la revendication 7, comprenant
- des moyens de réception et de traitement d'un message, émis par un terminal connecté au deuxième réseau, comprenant un code d'accès,
- des moyens pour inhiber l'envoi de commande à une entité du premier réseau si aucun message comprenant un code d'accès affecté pour un accès distant au premier réseau n'a été reçu pendant un intervalle de temps prédéfini.

10. Serveur (HCS) de contrôle d'accès comprenant,
- des moyens pour affecter un code d'accès à un utilisateur en vue d'un accès distant à un premier réseau distant dans lequel se trouve au moins une entité (DMS11, DMS12) à commander,
- des moyens pour fournir, en échange dudit code d'accès, des données d'adressage d'un premier module relais (DMS-R1) mis en oeuvre dans le premier réseau (RS1) et apte à transmettre une commande à ladite au moins une entité, les données d'adressage étant utilisables par un deuxième module relais (DMS-R2) mis en oeuvre dans le deuxième réseau (RS2) pour établir une liaison de communication avec le premier module relais (DMS-R1) via laquelle transmettre au premier module relais au moins une commande destinée à ladite entité.

11. Serveur selon la revendication 10, comprenant
- des moyens pour transmettre ledit code d'accès à un terminal,
- des moyens pour recevoir ledit code d'accès en provenance d'un équipement requérant lesdites données d'adressage,
- des moyens pour vérifier si l'équipement qui fournit ledit code d'accès est identifié par la même adresse que le terminal auquel ce même code d'accès a été fourni précédemment par ledit serveur.

12. Serveur selon la revendication 10, comprenant
- des moyens pour transmettre ledit code d'accès à un terminal,
- des moyens pour, à réception d'un code d'accès en provenance d'un équipement requérant lesdites données d'adressage, envoyer audit terminal un message pour demander à un utilisateur de ce terminal s'il autorise l'envoi audit équipement desdites données d'adressage.

13. Terminal comprenant des moyens d'interrogation d'un serveur selon la revendication 10 pour obtenir un code d'accès affecté à un utilisateur pour un accès distant à un premier réseau distant dans lequel se trouve au moins une entité (DMS11, DMS12) à commander,
le code d'accès obtenu étant utilisable pour obtenir auprès dudit serveur des données d'adressage d'un premier module relais (DMS-R1) mis en oeuvre dans le premier réseau (RS1) et apte à transmettre une commande à ladite au moins une entité.

## Patentansprüche

1. Verfahren zur Fernsteuerung mindestens einer Einheit (DMS11, DMS12) eines ersten Netzes (RS1) von einem zweiten Netz (RS2) aus, wobei das Verfahren umfasst:
- einen Schritt des Erhalts als Austausch mit einem Zugangscode, der einem Benutzer für einen Fernzugang zum ersten Netz zugeordnet ist, von Adressierdaten eines ersten Relaismoduls (DMS-R1), das im ersten Netz eingesetzt wird und geeignet ist, einen Befehl an die mindestens eine Einheit zu übertragen,
- einen Schritt der Herstellung einer Kommunikationsverbindung mit dem ersten Relaismodul (DMS-R1) durch ein zweites Relaismodul (DMS-R2), das in dem zweiten Netz unter Verwendung der Adressierdaten eingesetzt wird;
- einen Schritt der Übertragung an das erste Relaismodul mindestens eines für die Einheit bestimmten Befehls durch das zweite Relaismodul (DMS-R2) über die Kommunikationsverbindung.

2. Verfahren nach Anspruch 1, bei dem die Adressierdaten eine IP-Adresse und eine Nummer eines Kommunikationsanschlusses umfassen.

3. Verfahren nach Anspruch 1, bei dem die Adressierdaten bei einem Server erhalten werden, der den Zugangscode an den Benutzer geliefert hat.

4. Verfahren nach Anspruch 1, bei dem die Einheit ein Inhaltsserver ist, wobei das Verfahren einen Schritt der Lieferung einer Adresse mindestens eines Inhalts, der im Inhaltsserver eine Referenz hat, wobei die Adresse das zweite Relaismodul als Einheit, bei der der Inhalt erhalten werden kann, bezeichnet, umfasst.

5. Verfahren nach Anspruch 1, umfassend einen Schritt des Einsatzes eines Erfassungsmechanismus durch das zweite Relaismodul (DMS-R2), damit das zweite Relaismodul als Inhaltsserver des zweiten lokalen Netzes erkannt wird.

6. Verfahren nach Anspruch 1, bei dem der Zugangscode temporär und/oder für einmalige Verwendung ist.

7. Ausrüstung (STB2) zur Fernsteuerung mindestens einer Einheit (DMS11, DMS12) eines ersten Netzes (RS1) von einem zweiten Netz (RS2) aus, wobei die Ausrüstung umfasst:
- Mittel (HCA) für den Erhalt als Austausch mit einem Zugangscode, der einem Benutzer für einen Fernzugang zum ersten Netz zugeordnet ist, von Adressierdaten eines ersten Relaismoduls (DMS-R1), das im ersten Netz (RS1) eingesetzt wird und geeignet ist, einen Befehl an die mindestens eine Einheit zu übertragen,
- ein zweites Relaismodul (DMS-R2), das derart ausgeführt ist, dass es die Adressierdaten verwendet, wobei es eine Kommunikationsverbindung mit dem ersten Relaismodul (DMS-R1) herstellt, und dass es mindestens einen für die Einheit bestimmten Befehl an das erste Relaismodul überträgt.

8. Ausrüstung (STB2) nach Anspruch 7, umfassend Mittel zur Abfrage eines Servers, der den Zugangscode an den Benutzer geliefert hat.

9. Ausrüstung (STB2) nach Anspruch 7, umfassend
- Mittel für den Empfang und die Bearbeitung einer Nachricht, die von einem an das zweite Netz angeschlossenen Terminal entsandt wird, umfassend einen Zugangscode,
- Mittel, um das Senden eines Befehls an eine Einheit des ersten Netzes zu verhindern, wenn keine Nachricht, umfassend einen Zugangscode, der für einen Fernzugang zum ersten Netz zugewiesen ist, während eines vordefinierten Zeitintervalls empfangen wurde.

10. Zugangskontrollserver (HCS), umfassend
- Mittel, um einen Zugangscode einem Benutzer für einen Fernzugang zu einem ersten entfernten Netz zuzuweisen, in dem sich mindestens eine zu steuernde Einheit (DMS11, DMS12) befindet,
- Mittel für die Lieferung als Austausch mit dem Zugangscode der Adressierdaten eines ersten Relaismoduls (DMS-R1), das im ersten Netz (RS1) eingesetzt wird und geeignet ist, einen Befehl an die mindestens eine Einheit zu übertragen, wobei die Adressierdaten von einem zweiten Relaismodul (DMS-R2), das in dem zweiten Netz (RS2) eingesetzt wird, verwendbar sind, um eine Kommunikationsverbindung mit dem ersten Relaismodul (DMS-R1) herzustellen, über die an das erste Relaismodul mindestens ein für die Einheit bestimmter Befehl übertragen wird.

11. Server nach Anspruch 10, umfassend
- Mittel, um den Zugangscode an ein Terminal zu übertragen,
- Mittel, um den Zugangscode von einer Ausrüstung, die die Adressierdaten anfordert, zu erhalten,
- Mittel, um zu überprüfen, ob die Ausrüstung, die den Zugangscode liefert, durch dieselbe Adresse wie das Terminal, an das dieser selbe Zugangscode vorher vom Server geliefert wurde, identifiziert ist.

12. Server nach Anspruch 10, umfassend
- Mittel, um den Zugangscode an ein Terminal zu übertragen,
- Mittel, um bei Erhalt eines Zugangscodes von einer Ausrüstung, die die Adressierdaten anfordert, an das Terminal eine Nachricht zu senden, um den Benutzer dieses Terminals zu fragen, ob er das Senden der Adressierdaten an die Ausrüstung gestattet.

13. Terminal, umfassend Mittel zur Abfrage eines Servers nach Anspruch 10, um einen Zugangscode zu erhalten, der einem Benutzer für den Fernzugang zu einem entfernten ersten Netz zugewiesen ist, bei dem mindestens eine zu steuernde Einheit (DSM11, DSM12) vorhanden ist, wobei der erhaltene Zugangscode verwendbar ist, um bei dem Server Adressierdaten eines ersten Relaismoduls (DMS-R1) zu erhalten, das in dem ersten Netz (RS1) eingesetzt wird und geeignet ist, einen Befehl an die mindestens eine Einheit zu übertragen.

## Claims

1. Method of remote control of at least one entity (DMS11, DMS12) of a first network (RS1) from a second network (RS2), the method comprising,
- a step of obtaining, in exchange for an access code allotted to a user for remote access to the first network, of addressing data of a first relay module (DMS-R1) implemented in the first network, able to transmit a command to said at least one entity,
- a step of establishing, by a second relay module (DMS-R2) implemented in the second network using said addressing data, of a communications link with the first relay module (DMS-R1);
- a step of transmission to the first relay module, by the second relay module (DMS-R2), via said communications link of at least one command intended for said entity.

2. Method according to Claim 1, wherein the addressing data comprise an IP address and a communications port number.

3. Method according to Claim 1, wherein the addressing data are obtained from a server having provided said access code to said user.

4. Method according to Claim 1, wherein said entity is a content server, the method comprising a step of provision of an address of at least one content referenced by said content server, said address designating the second relay module as entity from which said content is able to be obtained.

5. Method according to Claim 1, comprising a step of implementation of a discovery mechanism by the second relay module (DMS-R2) so that this second relay module is recognized as content server of the second local area network.

6. Method according to Claim 1, wherein said access code is temporary and/or single-use.

7. Device (STB2) for remote control of at least one entity (DMS11, DMS12) of a first network (RS1) from a second network (RS2), the device comprising,
- means (HCA) for obtaining, in exchange for an access code allotted to a user for remote access to the first network, addressing data of a first relay module (DMS-R1) implemented in the first network (RS1) and able to transmit a command to said at least one entity,
- a second relay module (DMS-R2) configured to use said addressing data by establishing a communications link with the first relay module (DMS-R1) and to transmit to the first relay module at least one command intended for said entity.

8. Device (STB2) according to Claim 7, comprising means for interrogating a server having provided said access code to said user.

9. Device (STB2) according to Claim 7, comprising
- means for receiving and processing a message, emitted by a terminal connected to the second network, comprising an access code,
- means for inhibiting the sending of commands to an entity of the first network if no message comprising an access code allotted for remote access to the first network has been received during a predefined time interval.

10. Access control server (HCS) comprising,
- means for allotting an access code to a user with a view to remote access to a first remote network in which at least one entity (DMS11, DMS12) to be commanded exists,
- means for providing, in exchange for said access code, addressing data of a first relay module (DMS-R1) implemented in the first network (RS1) and able to transmit a command to said at least one entity, the addressing data being usable by a second relay module (DMS-R2) implemented in the second network (RS2) to establish a communications link with the first relay module (DMS-R1) via which to transmit to the first relay module at least one command intended for said entity.

11. Server according to Claim 10, comprising
- means for transmitting said access code to a terminal,
- means for receiving said access code originating from a device requesting said addressing data,
- means for verifying whether the device that provides said access code is identified by the same address as the terminal to which this same access code has been previously provided by said server.

12. Server according to Claim 10, comprising
- means for transmitting said access code to a terminal,
- means for, on receiving an access code originating from a device requesting said addressing data, sending to said terminal a message to ask a user of this terminal whether he authorizes the sending to said device of said addressing data.

13. Terminal comprising means for interrogating a server according to Claim 10 to obtain an access code allotted to a user for remote access to a first remote network in which at least one entity (DMS11, DMS12) to be commanded exists,
the access code obtained being usable to obtain from said server addressing data of a first relay module (DMS-R1) implemented in the first network (RS1) and able to transmit a command to said at least one entity.
